Europäisches Patentamt

European Patent Office

Office européen des brevets

(11) Numéro de publication : **0 517 564 A1**

# (12) DEMANDE DE BREVET EUROPEEN

(21) Numéro de dépôt : **92401421.0**

(51) Int. Cl.⁵ : **H04N 7/00**

(22) Date de dépôt : **25.05.92**

(30) Priorité : **27.05.91 FR 9106335**

(43) Date de publication de la demande :
**09.12.92 Bulletin 92/50**

(84) Etats contractants désignés :
**AT BE CH DE DK ES GB GR IT LI LU MC NL PT
SE**

(71) Demandeur : **MATRA COMMUNICATION
50, rue du Président Sadate
F-29100 Quimper (FR)**

(72) Inventeur : **Jouet, Jean-Claude
2 Avenue des Saules
F-78650 Beynes (FR)**

(74) Mandataire : **Fort, Jacques
CABINET PLASSERAUD 84, rue d'Amsterdam
F-75009 Paris (FR)**

(54) **Procédé et dispositif d'insertion de voies paquets dans un signal de télévision à multiplex analogique-numérique.**

(57) Dispositif pour insérer au moins une voie paquets suplémentaires dans un signal entrant de type MAC/P comprenant des moyens de démultiplexage séparant la partie numérique du signal entrant ($S_1$) de la partie analogique, des moyens pour substituer des paquets constituant la voie à insérer à une partie au moins des paquets inutilisés et des moyens de multiplexage de la partie analogique inchangée et de la partie numérique modifiée, provenant des moyens de substitution, pour constituer un signal sortant ($S_2$).

FIG.1.

L'invention concerne la diffusion de programmes de télévision, et notamment de programmes de télévision à accès conditionnel, sous forme d'un signal à radio-fréquence constitué d'un multiplex temporel de signaux analogiques d'images et de signaux numériques de données et de son ; elle trouve une application particulièrement importante dans la diffusion de programmes suivant la norme MAC/PAQUET (qu'on désignera pour simplifier par le terme MAC/P) utilisant le système d'accès d'Eurocrypt défini dans le document *"Système d'accès conditionnel pour la famille MAC/PAQUET : Eurocrypt"* publié en mars 1989.

L'invention est cependant applicable à la diffusion de programmes sous forme de signaux autres que ceux de la norme et notamment de signaux de télévision haute définition dits HD MAC.

L'invention vise plus particulièrement à fournir un procédé et un dispositif permettant d'insérer, dans un signal entrant du type ci-dessus défini, dont la partie numérique est incomplètement utilisée, une ou plusieurs voies paquets supplémentaire.

Dans le cas d'un signal MAC/P, l'invention peut être mise en oeuvre chaque fois que le signal entrant comporte, dans sa partie numérique, des paquets de bourrage représentant des ressources inutilisées, en nombre suffisant.

La substitution de paquets de bourrage par des paquets supplémentaires, surtout lorsqu'ils sont embrouillés par un circuit introduisant un retard, semble a priori difficile à réaliser. En effet, d'une part il est indispensable de ne faire subir aucune altération aux composantes du signal entrant, en particulier lorsqu'il est embrouillé et d'autre part il faut éviter tout déphasage relatif dépassant une fraction d'échantillon dans le signal sortant. Au surplus, il faut dans la quasi-totalité des cas insérer non seulement les paquets représentant une ou plusieurs voies supplémentaires, mais aussi les informations permettant de retrouver ces voies dans le signal de sortie.

L'invention vise à fournir un procédé et un dispositif permettant de répondre à ces conditions.

Elle propose notamment dans ce but un procédé d'insertion de voies paquets supplémentaires dans un signal entrant de diffusion de programmes sous forme d'un multiplex numérique-analogique du genre ci-dessus défini, dans lequel la partie numérique comporte des paquets de bourrage inutilisés (ou éventuellement des paquets représentant une voie son ou données à écarter au profit d'une autre),

caractérisé en ce qu'on démultiplexe le signal d'entrée pour séparer la partie numérique de la partie analogique, on substitue des paquets constituant une voie supplémentaire à une partie au moins des paquets de bourrage, on détermine le retard provoqué par la substitution de paquets et on effectue un multiplexage des parties analogique et numérique après avoir imposé à la partie analogique un retard correspondant à la durée de l'opération de substitution de paquets.

Dans le cas d'un signal de type MAC/P, on extrait la voie zéro et les paquets utiles de la partie numérique, en éliminant les inutilisés, tels que les paquets de bourrage, et on constitue une nouvelle partie numérique à partir des paquets utiles du signal d'entrée, des paquets de la voie supplémentaire et d'une nouvelle voie zéro contenant des données d'identification de la voie supplémentaire.

L'invention propose également un dispositif permettant de mettre en oeuvre le procédé ci-dessus défini, comprenant des moyens de démultiplexage séparant la partie numérique du signal entrant de la partie analogique, des moyens pour substituer des paquets constituant la voie à insérer à une partie au moins des paquets inutilisés et des moyens de multiplexage de la partie analogique inchangée et de la partie numérique modifiée par substitution de paquets.

L'invention sera mieux comprise à la lecture de la description qui suit d'un mode particulier de réalisation, donné à titre d'exemple non limitatif. La description se réfère aux dessins qui l'accompagnent, dans lesquels :

- la figure 1 est un schéma de principe montrant les opérations effectuées au cours d'un procédé d'insertion des paquets représentant une ou plusieurs voies son dans un signal constitué d'un multiplex numérique-analogique correspondant à la norme MAC/P ; et

- la figure 2 est un synoptique de principe d'une unité de traitement utilisable pour le traitement des paquets du multiplex suivant le procédé schématisé en figure 1.

La première opération effectuée sur le signal entrant $S_1$ est constituée par un démultiplexage 1, permettant de disposer en temps réel des différentes composantes du signal :

- partie analogique ou MAC, constituée par le signal d'image (luminance et chrominance),

- fractions de la partie numérique, constituées par le contenu de la ligne 625, les paquets $P_1$, qui constituent eux-mêmes un multiplex, et éventuellement le télétexte, certaines au moins de ces fractions pouvant être embrouillées avec une clé d'exploitation du genre décrit dans le document Eurocrypt.

Le multiplex constitué des paquets $P_1$ comporte, d'une part des paquets à conserver, représentant une ou plusieurs voies son, et d'autre part des paquets (paquets de bourrage en général) ayant une structure Identifiable qui doivent être remplacés par les paquets représentant une ou plusieurs voies son ou données supplémentaires.

Les paquets de bourrage peuvent, au gré du diffuseur, être constitués uniquement par des zéro, uniquement par des un, par une combinaison suivant une séquence prédéterminée ou par une combinaison aléatoire. Certains des paquets (les paquets d'ordre zéro dans le multiplex de chaque trame de signal, dans le cas du MAC/P) constituent une voie d'identification des services, souvent dénommées voie zéro.

Le multiplex des paquets $P_1$ est soumis, au cours d'une étape de traitement 2, à des opérations d'extraction des paquets à remplacer et d'insertion des paquets représentant une voie nouvelle, provenant d'une source 3, ou plusieurs.

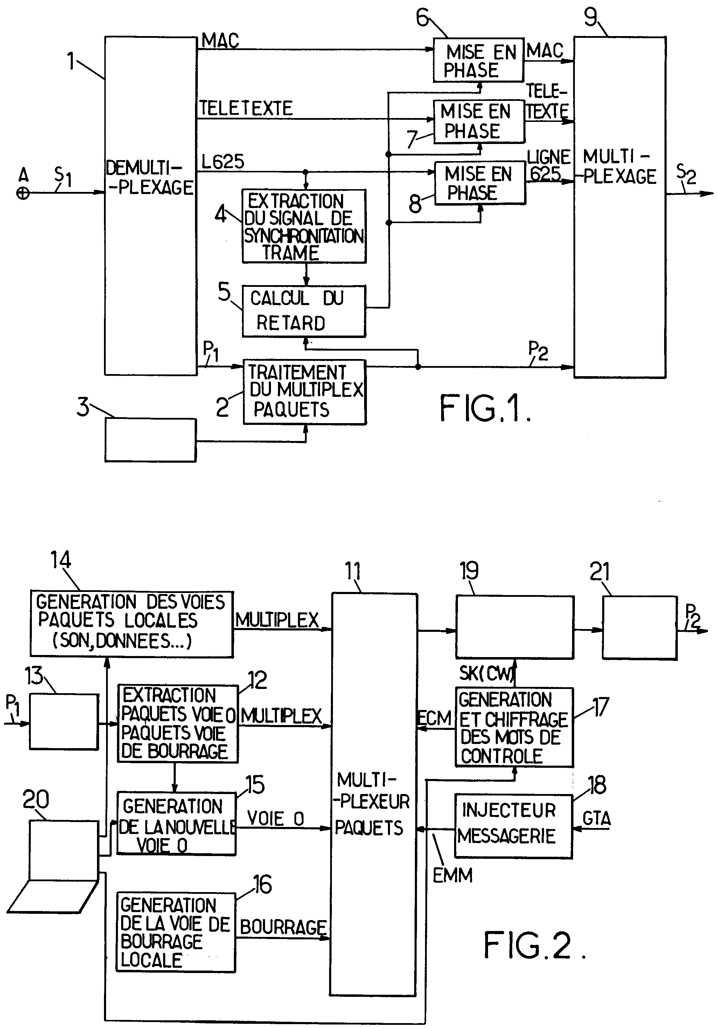

Pour permettre le multiplexage des paquets résultant du traitement avec les autres composants numériques et avec la partie analogique non modifiée, il est nécessaire, lorsque le signal est brouillé, d'assurer une remise en phase du multiplex analogique et des autres composants. Pour cela, on détermine le retard subi par les paquets lors du traitement 2. Dans le mode de réalisation montré en figure 1, le calcul 5 du retard est effectué par comparaison entre le multiplex constitué par les paquets provenant du traitement 2 et un signal de synchronisation de trame extrait de la ligne 625 et qui permet de reconstituer également le signal de synchronisation de ligne.

Il serait également possible de déterminer le retard en utilisant, en addition au signal de synchronisation de trame ou à sa place, les signaux de synchronisation de ligne présents dans les paquets à chaque ligne.

Le calcul 5 du retard est effectué à partir de signaux provenant d'une part de l'extraction de synchronisation 4, d'autre part, du multiplex de paquets $P_2$ résultant du traitement. Ce retard est utilisé pour trois opérations de mise en phase 6, 7 et 8, respectivement sur la partie analogique, le télétexte s'il existe et la ligne 625.

Cette synchronisation n'est pas nécessaire dans le cas d'un signal non embrouillé, car un retard de quelques trames du son par rapport à l'image n'est pas gênant.

Les composantes obtenues sont regroupées par multiplexage 9 et constituent un signal sortant $S_2$ en bande de base qui peut être utilisé pour moduler de nouveau une porteuse. Le signal $S_1$ peut être directement disponible en bande de base ou obtenu par démodulation d'un signal d'entrée : ce dernier cas est notamment celui de la mise en oeuvre de l'invention en tête de réseau terrestre de diffusion, la source A étant alors par exemple un récepteur de diffusion par satellite.

Les diverses étapes décrites jusqu'ici peuvent être réalisées en utilisant uniquement des composants actuellement disponibles, sauf pour le traitement 2. Cette étape peut être réalisée en utilisant un bloc du genre montré en figure 2, qui constitue un mode de réalisation avantageux, mais non exclusif.

Le bloc montré en figure 2 est notamment utilisable en cas d'accès conditionnel à la voie ou aux voies supplémentaires insérées. Dans ce cas, le multiplex $S_2$ doit comporter un message de contrôle de titre d'accès ECM, contenant un mot de contrôle CW chiffré par une clé d'exploitation SK propre à l'opérateur et indiquant les conditions d'accès au programme, modifié à fréquence élevée (une fois toute les 256 trames par exemple). Un message de gestion des titres et droits d'accès EMM propre à l'opérateur fournissant la voie insérée peut également être inséré, bien que les messages EMM puissent être fournis à l'abonné par un canal différent.

Le multiplex $P_1$, constitué de paquets, est appliqué à un circuit de débrassage et de désentrelacement 13 fournissant les paquets dans leur ordre naturel à un circuit d'extraction 12. Ce dernier écarte totalement les paquets de bourrage. Il transmet les paquets utiles entrants, par une première sortie, à un multiplexeur de paquets 11. Sur une autre sortie, le circuit 12 adresse la voie d'identification des services ou voie zéro à un générateur de nouvelle voie zéro 15.

Les paquets de substitution de la voie ajoutée et les indications de service supplémentaires permettant au décodeur d'abonné d'identifier la voie ajoutée peuvent être fournis par un opérateur local 20. Les signaux de son et de données sont envoyés, avec le même codage que celui du multiplex paquets du signal entrant, à un générateur local 14 qui formate les signaux reçus en des paquets également appliqués au multiplexeur 11. Les indications d'identification de la voie son ou données ajoutée sont adressées au générateur 15 qui les insère dans la voie zéro nouvelle.

Enfin, si les paquets insérés n'occupent pas la totalité de l'espace restant dans celui réservé aux paquets dans le multiplex, un générateur local 16 fournit des paquets de bourrage au format et avec la composition des paquets de bourrage d'origine.

Le multiplexeur de paquets 11 insère les différentes composantes numériques qu'il reçoit dans l'ordre approprié sous la commande d'un séquenceur non représenté dont la constitution peut être classique et dont le signal d'horloge peut être généré à partir du signal $P_1$.

Lorsque la voie à insérer fait l'objet d'un accès conditionnel, le multiplexeur de paquets 11 doit également introduire, dans le multiplex de sortie, au moins le message de contrôle d'accès ECM, renouvelé périodiquement, contenant le mot de contrôle CW chiffré par la clé d'exploitation SK. Les messages successifs de contrôle de titre d'accès ECM sont générés par un circuit de génération et de chiffrage des mots de contrôle 17 et adressés au multiplexeur 11 qui les insère dans le multiplex.

Le multiplexeur peut également recevoir des messages de contrôle de gestion des titres et droit d'accès d'un injecteur local supplémentaire de messagerie 18, qui reçoit les informations nécessaires d'un organe central de gestion GTA.

Dans la séquence de paquets fournie par le multiplexeur 11, les voies contenues dans le signal $S_1$ sont inchangées et en général n'ont pas à être traitées de nouveau. En particulier, elles restent embrouillées si elles l'étaient. Seule reste donc à embrouiller, le cas échéant, la voie ou les voies de son et/ou de données introduites par l'opérateur 20. L'opération est effectuée dans un circuit d'embrouillage 19 qui reçoit d'une part le multiplex numérique modifié, d'autre part les mots de contrôle successifs SK (CW) chiffrés par la clé d'exploitation SK. Le multiplex embrouillé de sortie du circuit 19 est envoyé à un circuit d'entrelacement et de brassage 21 symétrique du circuit 13 et, de là, au modulateur d'émission.

Comme cela a été indiqué plus haut, l'invention est susceptible de nombreuses variantes. La voie paquets à insérer peut transporter une information de nature quelconque, non limitée au son. Il est possible de substituer une voie son à une autre, par exemple pour doubler une retransmission de film, à condition que le débit de paquets exigé par la nouvelle voie son ne dépasse pas le total du débit de la voie son à remplacer et du débit de paquets de bourrage. Il doit être entendu que la portée du présent brevet s'étend à de telles variantes, aussi plus généralement qu'à toutes celles restant dans le cadre des équivalences.

## Revendications

1. Procédé d'insertion d'au moins une voie paquets supplémentaire dans un signal entrant de diffusion de programmes sous forme d'un multiplex temporel de signaux analogiques d'images et de signaux numériques de données et de son, dans lequel la partie numérique comporte des paquets inutilisés,

   caractérisé en ce qu'on démultiplexe le signal d'entrée pour séparer la partie numérique de la partie analogique, on substitue des paquets constituant au moins une voie paquets supplémentaire à une partie au moins des paquets de bourrage, on détermine le retard provoqué par la substitution de paquets et on effectue un multiplexage des parties analogique et numérique après avoir le cas échéant imposé à la partie analogique un retard correspondant à la durée de l'opération de substitution de paquets.

2. Procédé selon la revendication 1, d'insertion dans un signal de type MAC/P, caractérisé en ce qu'on extrait la voie zéro et les paquets utiles de la partie numérique, en éliminant les paquets de bourrage, et on constitue une nouvelle partie numérique à partir des paquets utiles du signal d'entrée, des paquets de la voie supplémentaire et d'une nouvelle voie zéro contenant des données d'identification de la voie supplémentaire.

3. Procédé selon la revendication 2, caractérisé en ce que, au cours du démultiplexage, on sépare la ligne 625 et le télétexte éventuel et en ce que, avant multiplexage des parties analogique et numérique, on impose également, à la ligne 625 et au télétexte éventuel, un retard correspondant à la durée de l'opération de substitution des paquets et d'embrouillage éventuel.

4. Procédé selon la revendication 2 ou 3, caractérisé en ce que, lors de la reconstitution de la nouvelle partie numérique, on injecte des messages de contrôle de titre d'accès à la voie supplémentaire et en ce que, après multiplexage, on embrouille la voie supplémentaire à partir de mots de contrôle chiffrés par une clé d'exploitation contenue dans les messages de contrôle de titre d'accès.

5. Dispositif d'insertion d'au moins une voie paquets supplémentaire dans un signal entrant de diffusion de programmes sous forme d'un multiplex temporel de signaux analogiques d'image et de signaux numériques de données et de son, dans lequel la partie numérique comporte des paquets inutilisés, caractérisé en ce qu'il comprend des moyens de démultiplexage séparant la partie numérique du signal entrant ($S_1$) de la partie analogique, des moyens pour substituer des paquets constituant la voie à insérer à une partie au moins des paquets inutilisés et des moyens de multiplexage de la partie analogique inchangée et de la partie numérique modifiée, provenant des moyens de substitution, pour constituer un signal sortant ($S_2$).

6. Dispositif selon la revendication 5, caractérisé par des moyens d'extraction de signal de synchronisation de la partie numérique, des moyens de calcul du retard introduit par la substitution de paquets et éventuellement d'embrouillage des paquets constituant la voie à insérer et des moyens pour retarder la partie analogique de la valeur du retard avant application aux moyens de multiplexage.

7. Dispositif selon la revendication 6 d'insertion dans un signal MAC/P, caractérisé en ce que les moyens de démultiplexage sont prévus pour fractionner la partie numérique en isolant la ligne 625, le télétexte et les paquets et en ce que les moyens de retard sont prévus pour retarder également la ligne 625 et le télétexte avant multiplexage.

8. Dispositif selon la revendication 6 ou 7 d'insertion dans un signal MAC/P, caractérisé en ce que les moyens de substitution comprennent : un circuit d'extraction (12) qui transmet les paquets utiles entrants à un multiplexeur de paquets (11) et la voie zéro à un générateur de nouvelle voie zéro (15) ; un générateur local (14) de formatage des paquets de substitution de la voie ajoutée et d'indications de service supplémentaires permettant au décodeur d'abonné d'identifier la voie ajoutée, attaquant le multiplexeur de paquets (11) ; un générateur local (16) fournissant éventuellement des paquets de bourrage au format et avec la composition des paquets de bourrage d'origine ; ledit multiplexeur de paquets (11) constituant, à partir des différentes composantes numériques, un multiplex adressé aux moyens de multiplexage numérique-analogique.

9.  Dispositif selon la revendication 8 d'insertion dans un signal MAC/P avec embrouillage de la voie insérée, caractérisé par un circuit de génération et de chiffrage de mots de contrôle (17) fournissant au moyens de multiplexage (11) les mots de contrôle chiffrés pour intégration dans le multiplex paquets et un circuit d'embrouillage (19) placé à la sortie des moyens de multiplexage pour embrouiller la voie ajoutée à partir des mots de contrôle à chiffrer.

FIG.1.

FIG.2.

**Office européen des brevets**

# RAPPORT DE RECHERCHE EUROPEENNE

Numero de la demande

EP 92 40 1421

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GLOBECOM'85, New Orleans, Louisiana, 2-5 décembre 1985, vol. 3, pages 43.6.1-43.6.5, New Orleans, Louisiana, US; L. CHIARIGLIONE et al.: "A family of frame structures for local digital video distribution" * Figure 1; page 43.6.1, colonne de droite, lignes 13-41 * | 1,5 | H 04 N 7/00 |
| A | UNION EUROPEENNE DE RADIODIFFUSION, octobre 1986, Tech. 3258-F, pages 262-264, Bruxelles, BE; "Spécification des systèmes de la famille MAC/paquets", Partie 8: "Transcodage entre les systèmes C, D et D2" * Pages 263,264, paragraphe 3.1 * | 1,3,5-7 | |
| A | UNION EUROPEENNE DE RADIODIFFUSION, octobre 1986, Tech. 3258-F, pages 270-292, Bruxelles, BE; "Spécification des systèmes de la famille MAC/paquets", "Appendice à la partie 3: Guide pour la réalisation du récepteur" * Page 270, ligne 1 - page 271, ligne 19; page 286, ligne 1 - page 289, ligne 6 * | 1,5 | DOMAINES TECHNIQUES RECHERCHES (Int. Cl.5) H 04 N H 04 J |
| A | PATENT ABSTRACTS OF JAPAN, vol. 5, no. 3 (E-40)[675], 10 janvier 1981; & JP-A-55 133 157 (NIPPON DENSHIN DENWA KOSHA) 16-10-1980 | 1,5 | |
| A | EP-A-0 341 891 (GEC PLESSEY) * Résumé * -/- | 1,5 | |

Le présent rapport a été établi pour toutes les revendications

| Lieu de la recherche | Date d'achèvement de la recherche | Examinateur |
|---|---|---|
| LA HAYE | 26-08-1992 | BOSCH F.M.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)

Office européen
des brevets

**RAPPORT DE RECHERCHE EUROPEENNE**

Numero de la demande

EP  92 40 1421

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 311 448  (K.K. TOSHIBA) <br> * Colonne 2, ligne 37 – colonne 6, ligne 15; figures 1-12 * <br> ----- | 1,5,6 | |
| | | | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 26-08-1992 | BOSCH F.M.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 & : membre de la même famille, document correspondant

EPO FORM 1503 03.82 (P0402)